# EUROPEAN PATENT SPECIFICATION

(11) **EP 2 263 358 B1**
(45) Date of publication and mention of the grant of the patent: **27.11.2019**
(21) Application number: 09728501.9
(22) Date of filing: 30.03.2009
(51) Int. Cl.: H04L 29/06, G06F 16/00

(54) **TELECOMMUNICATION SYSTEM**
TELEKOMMUNIKATIONSSYSTEM
SYSTÈME DE TÉLÉCOMMUNICATION

(30) Priority: 29.03.2008 WO PCT/CN2008/070635
(43) Date of publication of application: 22.12.2010
(73) Proprietor: Orange, 75015 Paris (FR)
(72) Inventor: REN, Zhen, Beijing 100080 (CN); WU, Si, Beijing 100080 (CN); SONG, Yang, Beijing 100080 (CN)
(74) Representative: Vidon Brevets & Stratégie
(86) International application number: PCT/IB2009/052738
(87) International publication number: WO 2009/122386

(56) References cited:
- EP-A- 1 182 587
- GB-A- 2 376 767
- US-A1- 2004 003 402
- US-A1- 2005 039 136

## Description

### Field of the Invention

The present invention relates in general to an end-to-end telecommunication system, and more specifically to media files exchange in such a system.

### Background of the Invention

The ever growing usage of smart terminals such as e.g. mobile phones and PDAs (Personal Digital Assistant) increases the requirement for new and more advanced multimedia content services and applications. Creation and sharing of personalized multimedia contents for such devices is a key feature in today's telecommunication market, but complexity of processing and effective content protection are two obstacles to be overcome in such a service.

The multimedia content created by the method disclosed in EP1870842A1 encompasses complex encoding processing too heavy to be played on most of smart terminals, considering the high complexity decoding algorithm and limited terminal computing power.

Furthermore, although WO2007091238A2 proposes a method to share the multimedia contents, it only discloses multiple files sharing.

In addition, US2005165726A1 describes a system wherein a user packs some different types of multimedia contents into a specified format and shares it through P2P networks.

Finally, US20020143803A1 describes the creation of rich-media content based on XML textual specification, but its creation procedure concerns graphical authoring complex tool for content creators at the user level and the packaged content is too heavy for smart terminals to render.

Today there is a need for a media content creation and sharing system that can be easily implemented on the existing telecommunication infrastructures.

### Summary of Invention

It is an object of the present method and system to overcome disadvantages and/or make improvement over the prior art.

To that extend, the invention proposes a file sharing method according to claim 1.

The method according to the invention proposes an end-to-end multimedia content aggregation solution for smart terminals or user equipments such as - but not limited to - e.g. mobile phones and PDAs. Said multimedia content comprises pictures, text messages, sounds, animations, videos, etc... In order to meet this goal, the invention proposes a simple multimedia content aggregation and sharing system and method based on a low complexity encoding way and an effective content protection method. It provides a specific multimedia file format and aggregation method in order to easily aggregate or combine different types of content, including pictures, audios, animations, videos and etc... and a terminal player that may jointly play many kinds of multimedia contents in one interface.

The invention also relates to a system according to claim 4.

The invention also relates to a media server according to claim 7.

The invention also relates to a computer program according to claim 10.

### Brief Description of the Drawings

Embodiments of the present invention will now be described by way of example only with reference to the accompanying drawings, where like parts are provided with corresponding reference numerals, and in which:
Figure 1 schematically illustrates a system according to an embodiment of the present invention;
Figure 2 schematically illustrates media server functions according to an embodiment of the present invention;
Figure 3 schematically illustrates terminal client functions according to an embodiment of the present invention;
Figure 4 schematically illustrates the method according to an embodiment of the present invention;
Figure 5 schematically illustrates an example of XML single aggregation file according to an embodiment of the present invention;
Figure 6 schematically illustrates an example of format of single aggregation file according to an embodiment of the present invention;
Figure 7 schematically illustrates an example of requirement on media objects according to an embodiment of the present invention;
Figure 8 schematically illustrates an example of player unit according to an embodiment of the present invention;
Figure 9 schematically illustrates an example of player User Interface according to an embodiment of the present invention.

### Description of Preferred Embodiments

The invention allows users in a telecommunication network to simply aggregate different multimedia contents into a single specific file with the help of dedicated service platform, such a single specific file can be easily played by smart terminals with a provided player client.

A dedicated service platform which may be hosted by a media server of the telecommunication network provides personalized multimedia content creating help that can automatically generate specific aggregated multimedia content file based on users' uploaded source material files such as pictures, audios, animations, videos and etc about advertising, funny video, greeting video etc...

According to one exemplary embodiment of the present invention, the system according to the invention proposes a simple encoding of the single specific file based on the base64 encoding (allowing binary data to be converted into a string of data) method. In this case, the aggregated multimedia contents can be easily decoded and processed after network transmission and played on smart terminals without high performance requirements. A XML format based content description mode may be used to aggregate the source material files. To secure the aggregated content, embedded content protection mechanism, comprising information such as user information and authorization, unique terminal information like International Mobile Equipment Identity (IMEI) number... may be used. A smart terminal or user equipment hosting a multimedia player client may be used to read the single specific file format.

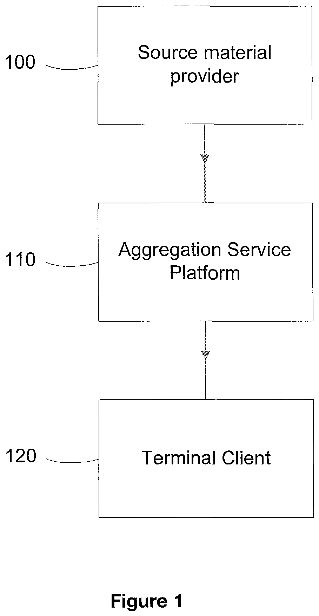

Figure 1 describes the multimedia content aggregation system according to one embodiment of the invention. It comprises three parts as follows: source material provider (100), aggregation service platform (110) managed by the Service Provider (SP) or the Network Operator (OP) and terminal client (120).

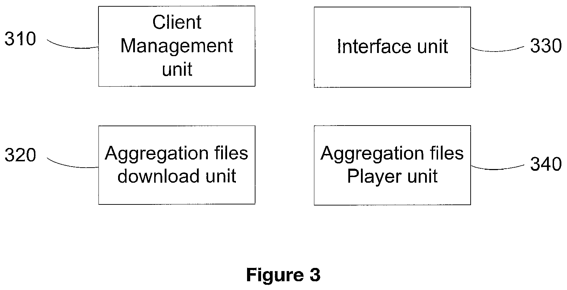

The source material provider (100), which corresponds to a first user having a plurality of media objects to share, uploads its source material contents (or the content he/she is willing to share), comprising pictures, audios, animations, videos and etc... Based on the provided source material contents, the dedicated aggregation service platform (110) generates a single specific (aggregation) file from the whole uploaded source material content. This process may be automatic or triggered based on a series of triggering events (user request, new source material content made available by the user, platform trigger etc...). The generated single aggregation file is thus available to be downloaded by a terminal client (120) attached to a second user who wants to render said file on his/her smart terminal or user equipment. The terminal player may be provided with an aggregation file player unit as described in relation to Figure 3. According to the requirements of terminal users, the aggregation file may be downloaded or pushed from the dedicated service platform to the terminal and played on the terminal by the player.

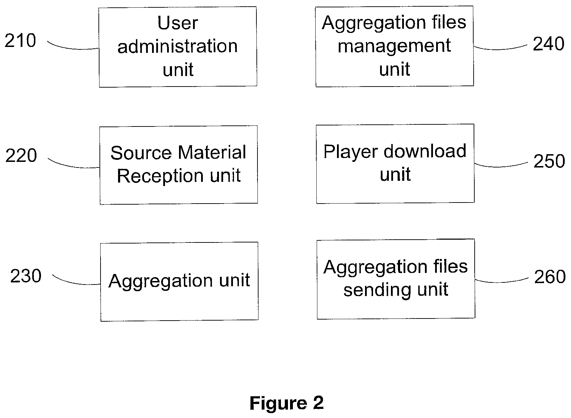

Figure 2 describes the main functions of the proposed aggregation service platform (110), which comprises a user administration unit (210), a source material reception unit (220), an aggregation unit (230), an aggregation files management unit (240), a player download unit (250) and an aggregation files sending unit (260).

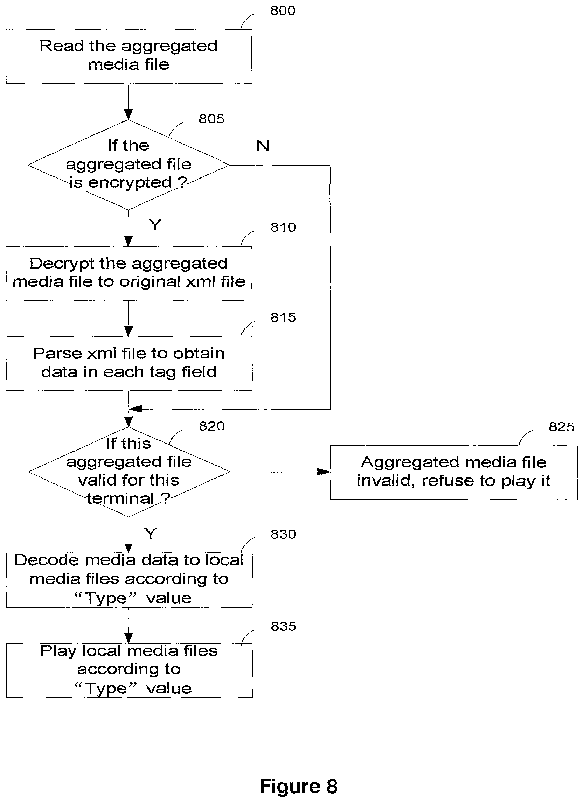

The user administration unit (210) provides user sign in to the multimedia content aggregation service platform (110), manages user information like user name, user mobile phone number, mobile IMEI number password, aggregation file upload records, aggregation file download records etc... The source material reception unit (220) receives user uploaded multimedia source material (files that may be of different formats such as e.g. mpeg, jpeg, wav, wma, wmv, mp3, mp4 etc...). The aggregation unit (230) aggregates user uploaded multimedia contents such as e.g. video, audio, picture, animation, text and etc... into a specific file format by merging all these content's binary data into a single file that may be subsequently encrypted. An exemplary single aggregation file format is later described in Figure 8. The aggregation files management unit (240) provides aggregation file browse, preview, search and download functions. The player download unit (250) provides the aggregation file player download to any signed-in user that needs a rendering player for the single aggregation file. The aggregation files sending unit allows sending aggregation files to terminal(s) either on request from the terminal or in a push mode from the aggregation service platform (110).

In addition, the aggregation service platform may also comprise a Web Portal or a WAP Portal to provide the above mentioned functions.

Figure 3 describes the main functions of the proposed terminal client (120) which comprise a client management unit (310), an aggregation files download unit (320), an interface unit (330) and an aggregation files player unit (340).

The client management unit (310) provides local aggregated file management functions such as local browse, enable, disable and delete. Besides, it also provides user interface for user to start or stop the player function. The aggregation files download unit (320) is mainly in charge of downloading and saving the single aggregated files from dedicated service platform. The interface module (330) provides an interface between the player client and the terminal in order to coordinate the different tasks. The aggregation files player unit (340) is adapted to play the multimedia content of the corresponding single aggregation file pushed or downloaded to the terminal client (120). In the aggregation files player unit (340), there are provider information, screen, function menu, text bar and operation buttons. This unit read users' uploaded source material files such as e.g. pictures, audios, animations, videos and etc about advertising, funny video, greeting video etc... The terminal client may be downloaded from the service platform (110) to the user equipment or smart terminal through the player download unit (250).

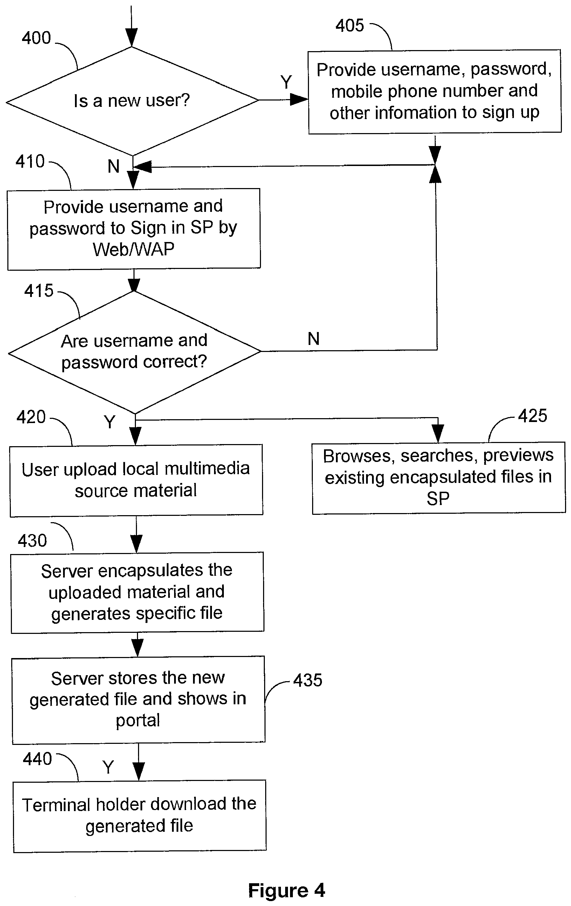

Figure 4 describes the creation of a multimedia aggregated file using the service platform (110). Firstly, if the user is a new user (400), he needs to sign up to the aggregation service platform (110) by providing his personal information such as e.g. username, password, phone number, IMEI number etc... in an act (405). Then, the user may uses his username and password to sign in through Web portal or WAP portal. (410)

The user administration unit (210) checks whether the username and password are correct (415). If so, the user is allowed to sign in and get right to use the other user administration functions. Otherwise, the user is asked to try again or denied access. After the authentication step, the user may browse, search and preview existing aggregated files through for example a Service Provider (or Network Operator) Web portal or WAP portal (hosted by or coupled to the service platform) in an act (420). In order to obtain a personalized specific multimedia file, the user firstly needs to upload some multimedia source material such as e.g. picture files, music files, animation files, music files etc... via e.g. Web upload, WAP upload or MMS in an act (425). Based on the uploaded source material, the service platform can aggregate the media files provided by the user and finally generate the single aggregation file. This step may be performed using e.g. a base64 encryption and XML file description processing for protecting the generated file (act 430). In addition, all generated files are stored and shown in the portal mentioned here before (act 435). Finally, they may be downloaded onto a smart terminal or user equipment attached to a second user and hosting the terminal client (120) in an act (440).

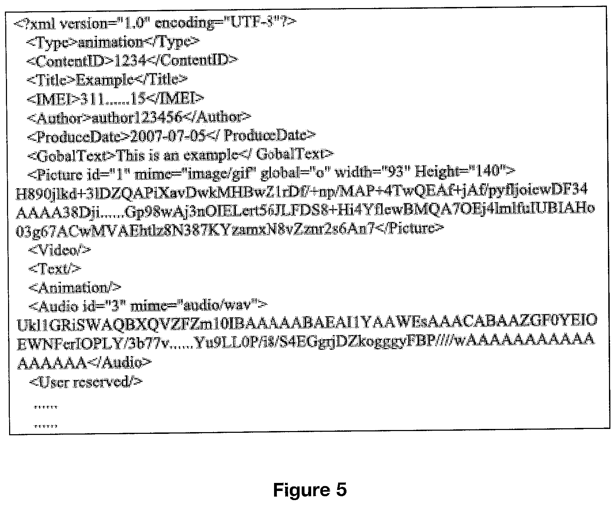

Figure 5 describes an example of specific aggregated file format based on XML file description. It contains several multimedia contents such as animation, picture, video, audio and text, and various file information such as encoding, ID, title, IMEI, author, date and authorization. In addition, this XML file is extensible and may be personally defined by the service provider in order to protect and describe the aggregated file.

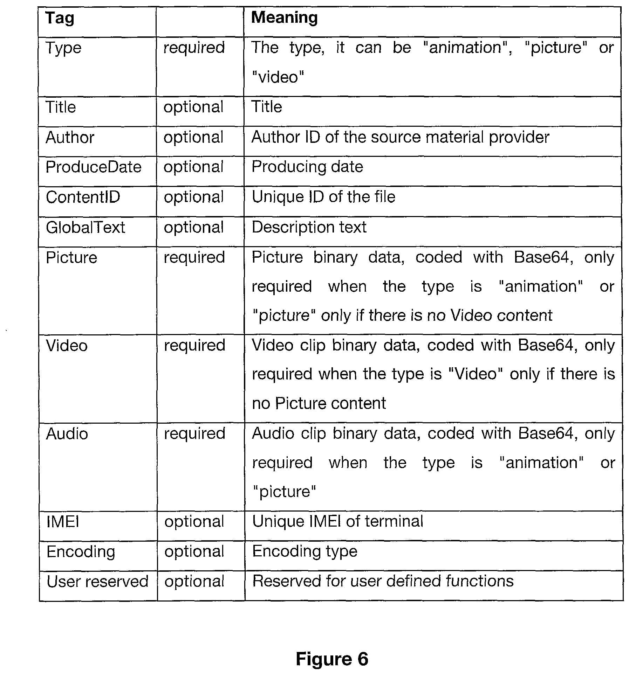

Figure 6 describes an example of tags that may be used in the aggregation file.

In a further act of the present method, the size of the single aggregation file may be limited. The aggregation file unit (230) of Figure 2 may be further adapted to limit the size of the media file through reducing the size of the aggregated media objects when necessary so that the resulting media file is not larger than a given media file size.

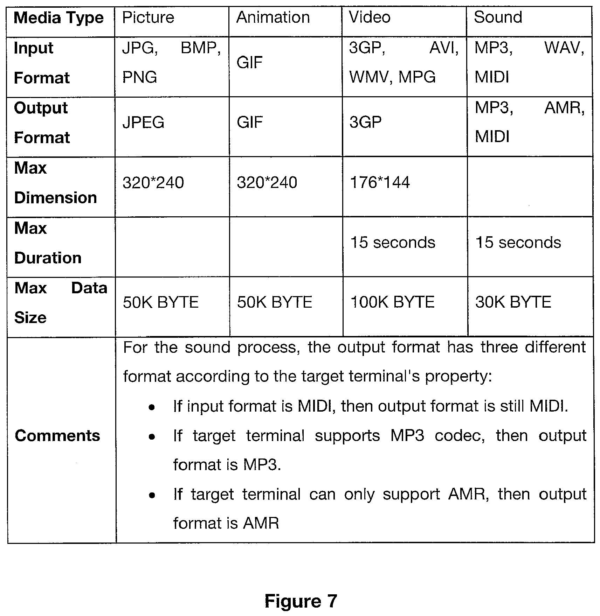

Figure 7 describes an example of properties to prevent the data size of the aggregation file to become too large for a smart terminal or a user equipment to download and store: multimedia source material may be modified or recoded thanks to unit (230) according to these properties so as to limit the final file size, e.g. through reducing the encoding rate or duration of media files, size limit of pictures...

In order to protect the content of file, some text encryption method may be used to transfer the XML file into a binary file. For example, the aggregation file may be encrypted by a stream cipher method in the aggregation unit (230) to protect it and decrypted in aggregation file download unit (320).

Figure 8 describes an illustrative embodiment of the aggregation files player unit (340) according to the invention.

After the aggregation file has been decrypted to the original xml file (act 810) by the corresponding stream cipher decryption (if the aggregation file was encrypted), the data in each tag field of said xml file is parsed out or read (act 815) in order to be further interpreted.

In act 820, this aggregation file is checked by some validation information to decide if this file may be played on the terminal. For example, if the International Mobile Equipment Identity (IMEI) field exists in the xml file, the IMEI value may be compared with the IMEI of the terminal. If two IMEI values are the same, then this aggregation file may be further decoded (act 830) and played (act 835), otherwise, the player may refuse to play this aggregation file (act 825).

In act 830, the media content embedded in the xml file may be extracted and optionally saved to a local storage or memory of the terminal according to "Type" value in the xml file.
If the type is "picture":
   The data in <picture> and </picture> is extracted out and decoded by e.g. Base64 algorithm. Then, the decoded data may be saved to a local file in type described in "mime" field in <picture> tag. For example, if the mime = "image/jpg", the local file may be named as A.jpg.
   The data in <audio> and </audio> is extracted out and decoded by e.g. Base64 algorithm. Then, the decoded data may be saved to a local file in type described in "mime" field in <audio> tag. For example, if the mime = "audio/wav", the local file may be named as A.wav.
If the type is "animation":
   The data in <animation> and </animation> is extracted out and decoded by e.g. Base64 algorithm. Then, the decoded data may be saved to a local file in type described in "mime" field in < animation > tag. For example, if the mime = "animation/gif", the local file may be named as B.gif.
   The data in <audio> and </audio> is processed in the same way like in "picture" type. For example, the local audio file may be named as B.wav.
If the type is "video":
   The data in <video> and </video> is extracted out and decoded by e.g. Base64 algorithm. Then, the decoded data may be saved to a local file in type described in "mime" field in < animation > tag. For example, if the mime = "video/3gp", the local file may be named as C.3gp.

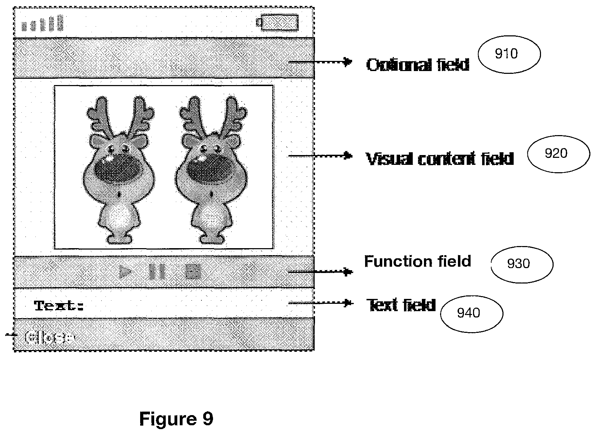

After the media content has been extracted out and (optionally) saved to local files (act 830), these local media files may be played (act 835) in the User Interface (Ul) (as described here under in reference to Figure 9) according to "Type" value in the xml file.

The playing of all these media files, like displaying picture or animation, playing audio and playing video, may be realized directly by calling the multimedia SDK tools provided by the terminal's development platform like for example Windows Mobile 5.0 Pocket PC SDK, and outputting different media content to the specific areas in the UI (as described here under in reference to Figure 9).

Figure 9 describes an illustrative embodiment of User Interface according to the invention.

According to the different "Type" values, different media content may be displayed as:
If the type is "picture" -- The local picture file, like A.jpg, is displayed in visual content field 920; The local audio file, like A.wav, is played in background.
If the type is "animation" -- The local animation file, like B.jpg, is displayed in visual content field 920; The local audio file, like B.wav, is played in background.
If the type is "video" - The local video file, like C.3gp, is played in visual content field 920 using the function field 930.

Besides of the above mentioned media content, text message may be displayed in the Text field 940, like e.g. the value of "Global Text" in the xml file. The optional field 910 may be used to display some additional information, like the name of the service provider, or the caller's name and phone number when this player is used to respond an incoming call.

In the method according to the invention, the aggregation files player unit (340) reads and plays media files itself, because the embedded player of smart terminals like Windows Media Player in WM smart phones or Real player in Nokia phones can not play the media composition in the xml file.

## Claims

1. A method for sharing files in a telecommunication network comprising a media server, said method being carried out by said media server and comprising the acts of:
- receiving (420) from a first user equipment a plurality of media source material files of various media types,
- combining (430) said media source material files into one aggregated media file of a given media type, wherein the act of combining further comprises an act of limiting the size of the media file through reducing the size of the combined media source material files when necessary so that the resulting media file is not larger than a given media file size,
- sending (440) said media file to a second user equipment for subsequent rendering on a media player associated with said given media type.

2. A method according to any of the preceding claims, wherein the given media type is a XML file.

3. A method according to any of the preceding claims, wherein the act of combining further comprises an act of encrypting the one media file.

4. A system for sharing files in a telecommunication network comprising a media server and a plurality of user equipments, said media server being operable to:
- receive from a first user equipment a plurality of media source material files of various media types,
- combine said media source material files into one aggregated media file of a given media type,
- send said media file to a second user equipment for subsequent rendering on a media player associated with said given media type,
wherein said media server is further operable to limit the size of the media file through reducing the size of the combined media source material files when necessary so that the resulting media file is not larger than a given media file size.

5. A system according to claim 4, wherein the given media type is a XML file.

6. A system according to any of the preceding claims 4 to 6, wherein the media server is further operable to encrypt the one media file.

7. A media server for sharing files in a telecommunication network comprising a plurality of user equipments, said media server being operable to:
- receive from a first user equipment a plurality of media source material files of various media types,
- combine said media source material files into one aggregated media file of a given media type,
- send said media file to a second user equipment for subsequent rendering on a media player associated with said given media type,
- limit the size of the media file through reducing the size of the combined media source material files when necessary so that the resulting media file is not larger than a given media file size.

8. A media server according to claim 7, wherein the given media type is a XML file.

9. A media server according to any of the preceding claims 7 to 8, said media server being further operable to encrypt the one media file.

10. A computer program providing computer executable instructions stored on a computer readable medium, which when loaded on to a data processor causes the data processor to perform a method for sharing files according to claims 1 to 3.

## Patentansprüche

1. Verfahren zur Freigabe von Dateien in einem Telekommunikationsnetzwerk mit einem Medienserver, wobei das Verfahren vom Medienserver durchgeführt wird und die folgenden Vorgänge umfasst:
- Empfangen (420) einer Mehrzahl von Quellmaterial-Mediendateien verschiedener Medientypen von einer ersten Benutzereinrichtung,
- Kombinieren (430) der Quellmaterial-Mediendateien zu einer aggregierten Mediendatei eines gegebenen Medientyps, wobei
der Vorgang des Kombinierens ferner einen Vorgang des Begrenzens einer Größe der Mediendatei dadurch umfasst, dass die Größe der kombinierten Quellmaterial-Mediendateien nötigenfalls so reduziert wird, dass die resultierende Mediendatei nicht größer als eine gegebene Mediendateigröße ist,
- Senden (440) der Mediendatei an eine zweite Benutzereinrichtung zur anschließenden Wiedergabe auf einem Medienabspielgerät, das mit dem gegebenen Medientyp assoziiert ist.

2. Verfahren nach einem der vorhergehenden Ansprüche, wobei der gegebene Medientyp eine XML-Datei ist.

3. Verfahren nach einem der vorhergehenden Ansprüche, wobei der Vorgang des Kombinierens ferner einen Vorgang des Verschlüsselns der einen Mediendatei umfasst.

4. System zum Freigeben von Dateien in einem Telekommunikationsnetzwerk mit einem Medienserver und einer Mehrzahl von Benutzereinrichtungen, wobei der Medienserver ausgelegt ist zum:
- Empfangen einer Mehrzahl von Quellmaterial-Mediendateien verschiedener Medientypen von einer ersten Benutzereinrichtung,
- Kombinieren der Quellmaterial-Mediendateien zu einer aggregierten Mediendatei eines gegebenen Medientyps,
- Senden der Mediendatei an eine zweite Benutzereinrichtung zur anschließenden Wiedergabe auf einem Medienabspielgerät, das mit dem gegebenen Medientyp assoziiert ist.
wobei der Medienserver ferner so ausgelegt ist, dass er die Größe der Mediendatei dadurch begrenzt, dass er die Größe der kombinierten Quellmaterial-Mediendateien nötigenfalls so reduziert, dass die resultierende Mediendatei nicht größer als eine gegebene Mediendateigröße ist.

5. System nach Anspruch 4, wobei der gegebene Medientyp eine XML-Datei ist.

6. System nach einem der vorhergehenden Ansprüche 4 bis 6, wobei der Medienserver ferner zum Verschlüsseln der einen Mediendatei ausgelegt ist.

7. Medienserver zum Freigeben von Dateien in einem Telekommunikationsnetzwerk mit einer Mehrzahl von Benutzereinrichtungen, wobei der Medienserver ausgelegt ist zum:
- Empfangen einer Mehrzahl von Quellmaterial-Mediendateien verschiedener Medientypen von einer ersten Benutzereinrichtung,
- Kombinieren der Quellmaterial-Mediendateien zu einer aggregierten Mediendatei eines gegebenen Medientyps,
- Senden der Mediendatei an eine zweite Benutzereinrichtung zur anschließenden Wiedergabe auf einem Medienabspielgerät, das mit dem gegebenen Medientyp assoziiert ist.
- Begrenzen der Größe der Mediendatei dadurch, dass er die Größe der kombinierten Quellmaterial-Mediendateien nötigenfalls so reduziert, dass die resultierende Mediendatei nicht größer als eine gegebene Mediendateigröße ist.

8. Medienserver nach Anspruch 7, wobei der gegebene Medientyp eine XML-Datei ist.

9. Medienserver nach einem der vorhergehenden Ansprüche 7 bis 8, wobei der Medienserver ferner zum Verschlüsseln der einen Mediendatei ausgelegt ist.

10. Computerprogramm, das computerausführbare Anweisungen bereitstellt, die auf einem computerlesbaren Medium gespeichert werden und die, wenn auf einen Datenprozessor geladen, den Datenprozessor zum Durchführen eines Verfahrens nach Anspruch 1 bis 3 veranlassen.

## Revendications

1. Procédé de partage de fichiers dans un réseau de télécommunication comprenant un serveur média, ledit procédé étant exécuté par ledit serveur média et comprenant les actions suivantes :
- recevoir (420), depuis un premier équipement utilisateur, une pluralité de fichiers de données source de média de divers types de média,
- combiner (430) lesdits fichiers de données source de média en un seul fichier média agrégé d'un type de média donné, dans lequel l'action de combiner comprend en outre une action de limiter la taille du fichier média par une réduction de la taille des fichiers de données source de média combinés, si nécessaire, de sorte que le fichier média résultant n'est pas plus grand qu'une taille de fichier média donnée,
- envoyer (440) ledit fichier média à un deuxième équipement utilisateur pour une restitution ultérieure sur un lecteur média associé audit type de média donné.

2. Procédé selon l'une quelconque des revendications précédentes, dans lequel le type de média donné est un fichier XML.

3. Procédé selon l'une quelconque des revendications précédentes, dans lequel l'action de combiner comprend en outre une action de crypter ledit un fichier média.

4. Système de partage de fichiers dans un réseau de télécommunication comprenant un serveur média et une pluralité d'équipements utilisateur, ledit serveur média étant utilisable pour :
- recevoir, depuis un premier équipement utilisateur, une pluralité de fichiers de données source de média de divers types de média,
- combiner lesdits fichiers de données source de média en un seul fichier média agrégé d'un type de média donné,
- envoyer ledit fichier média à un deuxième équipement utilisateur pour une restitution ultérieure sur un lecteur média associé audit type de média donné, dans lequel ledit serveur média est en outre utilisable pour limiter la taille du fichier média par une réduction de la taille des fichiers de données source de média combinés, si nécessaire, de sorte que le fichier média résultant n'est pas plus grand qu'une taille de fichier média donnée.

5. Système selon la revendication 4, dans lequel le type de média est un fichier XML.

6. Système selon l'une quelconque des revendications précédentes 4 à 6, dans lequel le serveur média est en outre utilisable pour crypter ledit un fichier média.

7. Serveur média de partage de fichiers dans un réseau de télécommunication comprenant une pluralité d'équipements utilisateur, ledit serveur média étant utilisable pour :
- recevoir, depuis un premier équipement utilisateur, une pluralité de fichiers de données source de média de divers types de média,
- combiner lesdits fichiers de données source de média en un seul fichier média agrégé d'un type de média donné,
- envoyer ledit fichier média à un deuxième équipement utilisateur pour une restitution ultérieure sur un lecteur média associé audit type de média donné,
- limiter la taille du fichier média par une réduction de la taille des fichiers de données source de média combinés, si nécessaire, de sorte que le fichier média résultant n'est pas plus grand qu'une taille de fichier média donnée.

8. Serveur média selon la revendication 7, dans lequel le type de média donné est un fichier XML.

9. Serveur média selon l'une quelconque des revendications précédentes 7 à 8, ledit serveur média étant en outre utilisable pour crypter ledit un fichier média.

10. Programme informatique fournissant des instructions exécutables par ordinateur stockées sur un support lisible par ordinateur qui, lorsqu'elles sont chargées sur un processeur de données, amènent le processeur de données à effectuer un procédé de partage de fichiers selon les revendications 1 à 3.
